# FASCICULE DE BREVET EUROPEEN

(11) **EP 1 833 293 B1**
(45) Date de publication et mention de la délivrance du brevet: **30.07.2008**
(21) Numéro de dépôt: 05821696.1
(22) Date de dépôt: 20.12.2005
(51) Int. Cl.: A01K 11/00

(54) **BOUTON DE MARQUAGE POUR ANIMAUX COMPORTANT UNE COQUE COMPOSEE DE DEUX ELEMENTS TEINTES**
TIERKENNZEICHNUNGSMARKE AUS EINER HÜLLE MIT ELEMENTEN IN ZWEI FARBEN, NÄMLICH EINEM KOHLENSCHWARZEN ELEMENT UND EINEM HELLEN ELEMENT
ANIMAL MARKING TAG CONSISTING OF A SHELL COMPRISING TWO COLOURED ELEMENTS, NAMELY A CARBON BLACK ELEMENT AND A BRIGHTLY-COLOURED ELEMENT

(30) Priorité: 22.12.2004 FR 0413725
(43) Date de publication de la demande: 19.09.2007
(73) Titulaire: Allflex Europe SAS, 35502 Vitre Cedex (FR)
(72) Inventeur: HILPERT, Jean Jacques, F-35500 Vitre (FR)
(74) Mandataire: Ravina, Bernard
(86) Numéro de dépôt international: PCT/EP2005/056978
(87) Numéro de publication internationale: WO 2006/067152

(56) Documents cités:
- FR-A- 2 845 564
- US-A1- 2002 095 828

## Description

### Domaine technique de l'invention.

L'invention est du domaine du marquage et de l'identification des animaux, et plus particulièrement du domaine des étiquettes auriculaires pour le bétail équipée d'un organe électronique d'identification. Elle a pour objet un bouton électronique de marquage et d'identification participant d'une telle étiquette auriculaire, destiné à coopérer avec un doigt pour sa mise en place sur l'animal.

### Etat de la technique.

Les étiquettes auriculaires pour l'identification et le marquage des animaux associent couramment un bouton de réception d'un doigt par emboîtement irréversible, pour la fixation inviolable de l'étiquette sur l'animal. Parmi ces boutons, on connaît ceux qui logent un organe électronique de marquage et d'identification de l'animal, tel qu'un transpondeur ou organe analogue.

il a été plus particulièrement proposé par FR2845564 (ALLFLEX), un bouton auriculaire composé de deux coques, l'une supérieure et l'autre inférieure, entre lesquelles est logé l'organe électronique. Les deux coques, obtenues par moulage d'une matière plastique, sont assemblés entre elles par soudage au faisceau LASER. Pour obtenir l'échauffement des coques dans la zone de soudage, la coque inférieure est translucide pour laisser passer librement le faisceau, tandis que la coque supérieure est teintée à partir d'un agent, tel que noir de carbone, pour faire obstacle au passage du faisceau.

Il est par ailleurs souhaité de rendre la coque supérieure la plus contrastée par rapport aux marquages qu'elle peut recevoir par marquage au laser ou tout autre procédé. Les concepteurs s'attachent donc à conférer à la matière constitutive de la coque supérieure une coloration vive.
Il apparaît cependant que la teinture au noir de carbone de la coque supérieure rend difficile l'obtention de sa coloration vive. Il en ressort pour les concepteurs un compromis à trouver entre la faculté de la coque supérieure à faire obstacle au passage du faisceau LASER pour l'opération de soudage, et l'obtention d'une coloration de cette coque suffisamment vive.

Une autre difficulté à résoudre réside dans la conception d'un bouton facilitant la mise en place du doigt qu'il est destiné à recevoir, sans pour autant porter atteinte à la fiabilité de leur liaison irréversible.

### Objet de l'invention.

Le but de la présente invention est de proposer un bouton pour le marquage et l'identification des animaux, du genre composé de deux coques assemblées entre elles par soudage au faisceau LASER et logeant entre elles un organe électronique d'identification des animaux. Il est plus particulièrement visé par la présente invention de proposer un tel bouton qui concilie au mieux le caractère souhaité contrasté de ce bouton et sa faculté à permettre un soudage des deux coques entre elles au moyen d'un faisceau LASER. Subsidiairement, il est aussi visé par la présente invention de proposer un tel bouton dont l'agencement facilite au mieux l'opération de sa jonction irréversible avec un doigt qu'il est destiné à recevoir.

Le bouton de la présente invention est un bouton de marquage et d'identification d'un animal destiné à recevoir un doigt par emboîtement irréversible. Ce bouton est composé de deux coques obtenues par moulage d'un matériau plastique, l'une supérieure et l'autre inférieure. Ces coques logent entre elles un organe électronique d'identification de l'animal et sont assemblées l'une à l'autre par soudage au faisceau LASER. La coque inférieure est translucide pour le passage du faisceau tandis que la coque supérieure est teintée pour faire obstacle au passage du faisceau lors de l'opération de soudage des coques entre elles. Selon la présente invention, un tel bouton de marquage est principalement reconnaissable en ce que la coque supérieure est composée d'au moins deux éléments assemblés en prolongement axial l'un de l'autre, dont un élément de base de couleur obscure pour faire obstacle au passage du faisceau LASER et un élément de sommet de couleur vive pour rendre le bouton contrasté par rapport aux marquages qu'il peut recevoir par marquage au laser ou tout autre procédé.

Il ressort de ces dispositions que les concepteurs sont dispensés de la contrainte d'avoir à concilier la teinture de la coque supérieure au noir de carbone pour faire obstacle au faisceau LASER, et sa teinture de couleur vive pour la rendre contrastée. Plus particulièrement, la zone teintée au noir de carbone de la coque supérieure est limitée à une zone de faible épaisseur située à sa base, tandis que sa majeure partie matérialisée par l'élément de sommet est susceptible d'être d'une coloration vive qui fera ressortir les marquages qu'elle peut recevoir par marquage au laser ou tout autre procédé.

L'assemblage entre eux des éléments de base et de sommet est préférentiellement réalisé par bi-injection de l'un des éléments sur l'autre des éléments. On notera cependant que cet assemblage est susceptible d'être réalisé par une autre méthode, telle que le collage ou l'assemblage à chaud, sans pour autant déroger aux règles de l'invention.

Dans le cas préféré d'un assemblage des éléments de base et de sommet entre eux par bi-injection, l'un quelconque au moins des éléments de base et de sommet comporte de préférence des évidements de réception de la matière constitutive de l'autre élément, pour l'ancrage des éléments l'un à l'autre.

Selon un exemple préféré de réalisation, l'élément de sommet comporte lesdits évidements de réception de la matière de l'élément de base.

De préférence, l'élément de base est extérieurement enveloppé dans sa majeure partie par l'élément de sommet, de manière à masquer au mieux sa présence vue de l'extérieur du bouton, et favoriser le caractère contrasté par rapport aux marquages qu'il peut recevoir.

L'élément de base comporte notamment à sa périphérie un épaulement ménageant une feuillure de réception d'une collerette que comporte la coque inférieure à son pourtour.

On relèvera qu'il est préférable de faire affleurer les faces extérieures de la base de l'élément de sommet, de l'épaulement de l'élément de base, et de la collerette de la coque inférieure. Ces dispositions sont telles que le bouton étant assemblé, la partie apparente de l'élément de base est réduite à l'épaulement qu'il comporte.

La coque inférieure comporte de préférence une aile circulaire médiane de calage de l'organe électronique, ce dernier étant notamment logé entre la collerette et l'aile circulaire.

En outre, la coque inférieure comporte notamment un canon axial de réception dudit doigt. Ce canon axial est préférentiellement à épaisseur sensiblement constante et est de forme conique évasée vers sa base. De surcroît, le canon est avantageusement subdivisé en ailettes axiales élastiquement déformables, entre lesquelles est destiné à circuler ledit doigt. Ces dispositions permettent de faciliter l'introduction et le guidage axial du doigt lors de son introduction à l'intérieur du bouton.

Le canon comporte de préférence à sa base une zone cylindrique de réception de l'extrémité d'un fût que comporte l'élément de base. Cette zone cylindrique est susceptible d'être mise à profit pour ménager une zone de soudage entre la coque inférieure et l'élément de base de la coque supérieure.

L'extension axiale du canon est préférentiellement de l'ordre de celle du fût.

La matière constitutive de la coque inférieure et des éléments composant la coque supérieure est notamment le polyamide.

Plus particulièrement, la matière constitutive de la coque inférieure est le polyamide 12, celle de l'élément de sommet est le polyamide 6.6 chargé de fibres de verre, et celle de l'élément de base le polyamide 6.12.

### Description des figures.

La présente invention sera mieux comprise, et des détails en relevant apparaîtront, à la lecture de la description qui va en être faite en relation avec les figures des planches annexées, dans lesquelles :
Les fig.1 et fig.2 sont des vues en perspective d'un bouton selon une forme préférée de réalisation de l'invention, respectivement vu de dessous et vu de dessus.
La fig.3 est une vue de côté du bouton représenté sur les fig.1 et fig.2.
La fig.4 est une vue en coupe axiale du bouton représenté sur les figures précédentes.
Les fig.5 et fig.6 sont des représentations en perspective d'une coque supérieure que comprend le bouton représenté sur les figures précédentes, respectivement vue de dessous et vue de dessus.
La fig.7 est une vue de côté de la coque supérieure représentée sur les fig.5 et fig.6.
La fig.8 est une vue en coupe axiale de la coque supérieure représentée sur les fig.5 à fig.7.
Les fig.9 et fig.10 sont des représentations en perspective d'une coque inférieure que comprend le bouton représenté sur les fig.1 à fig.4, respectivement vue de dessous et vue de dessus.
La fig.11 est une vue de côté de la coque inférieure représentée sur les fig.9 et fig.10.
La fig.12 est une vue en coupe axiale de la coque inférieure représentée sur les fig.9 à fig.11.

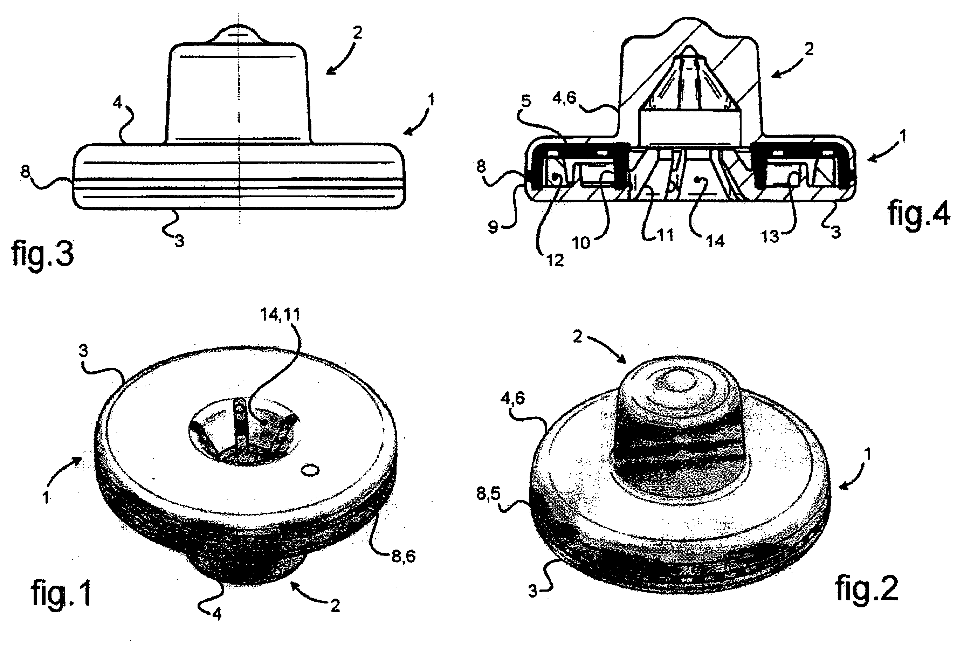

Sur les fig.1 à fig.4, un bouton de marquage et d'identification d'un animal est destiné à recevoir un doigt par emboîtement irréversible. Ce bouton est globalement conformé en un plateau 1, qui est rehaussé d'une chambre 2 de réception de l'extrémité du doigt pour leur fixation irréversible l'un à l'autre.

Ce bouton est composé de deux coques 3 et 4 obtenues par moulage d'une matière plastique, polyamide notamment. Ces deux coques, l'une inférieure 3 et l'autre supérieure 4, sont assemblées entre elles par soudage au faisceau LASER. Pour permettre un tel assemblage, la coque inférieure 3 est translucide, tandis que la coque supérieure 4 comporte une zone axiale teintée au noir de carbone. Outre cette zone, la coque supérieure 4 est teintée d'une couleur vive, pour la rendre contrastée par rapport aux marquages qu'elle peut recevoir par marquage au laser ou tout autre procédé.

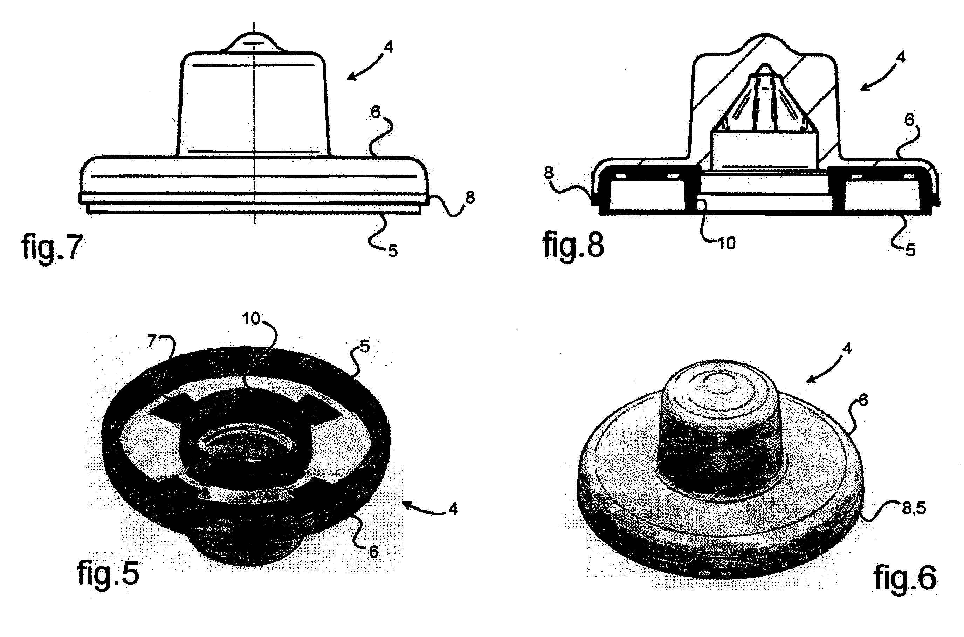

A cet effet, et en se reportant par ailleurs aux fig.5 à fig.8, la coque supérieure 4 est elle-même composée de deux éléments assemblés l'un à l'autre. Un élément de base 5 est teinté au noir de carbone, tandis qu'un élément de sommet 6 est teinté de couleur vive. Ces deux éléments 5 et 6 sont assemblés l'un à l'autre par bi-injection de matière, lors de leur formation par moulage.

En se reportant plus particulièrement sur la fig.5, l'élément de sommet 6 comporte des évidements 7 de réception de la matière constitutive de l'élément de base 5, pour favoriser leur ancrage l'un à l'autre. Par ailleurs, dans la zone du plateau 1 du bouton, l'élément de sommet 6 enveloppe dans sa majeure partie la face extérieure de l'élément de base 5, de manière à limiter l'apparence de ce dernier vu de l'extérieur du bouton.

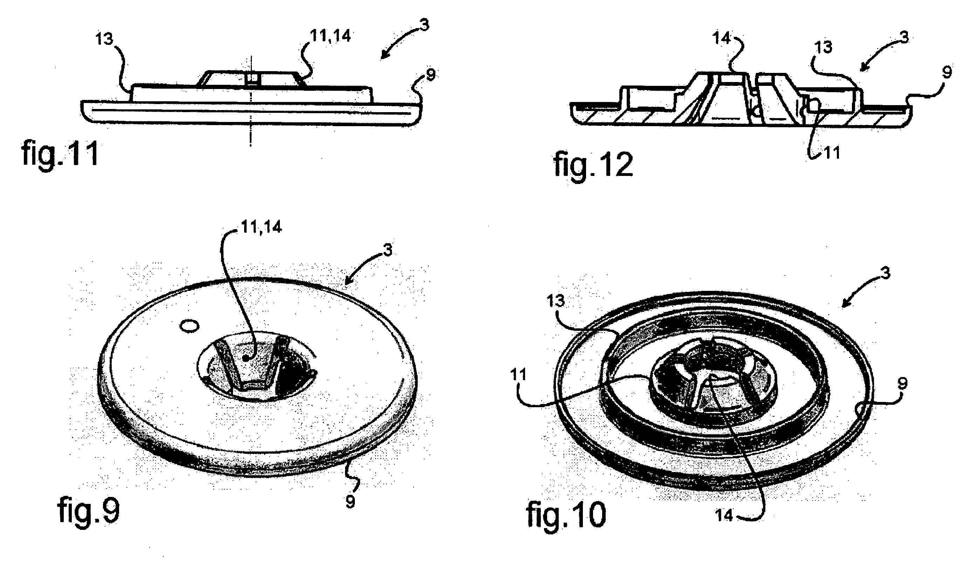

En se reportant par ailleurs aux fig.9 à fig.12, l'élément de base 5 comporte à sa périphérie un épaulement 8 de mise en butée axiale d'une collerette 9 que comporte la coque inférieure 3 à sa périphérie. En outre, l'élément de base 5 comporte un fût épaulé 10 pour la réception de la base d'un canon 11 que comporte la coque inférieure 3.

Le soudage des deux coques 3 et 4 entre elles est réalisé en deux zones de jonction, l'une située dans la zone de l'épaulement périphérique 8 de l'élément de base 5 de la coque supérieure 4, qui reçoit la collerette 6 de la coque inférieure 3, l'autre située à la base du fût 10, qui reçoit la base du canon 11 de la coque inférieure 3.

En revenant aux fig.1 à fig.4, il apparaît que dans la zone du plateau 1 du bouton, les faces extérieures de l'élément de sommet 6, de l'élément de base 5 et de la collerette 9 affleurent, en ne laissant apparaître de l'élément de base 5 que la face extérieure de l'épaulement 8 qu'il comporte pour la réception de la collerette 9 de la coque inférieure 3.

Sur la fig.4, les coques 3 et 4 composant le bouton logent entre elles un transpondeur 12, ou organe électronique analogue pour l'identification de l'animal. Ce transpondeur 12 est placé entre la paroi extérieure de l'élément de base 5 de la coque supérieure 4, et une aile circulaire médiane 13 que comporte la coque inférieure 3.

En revenant par ailleurs aux fig.9 à fig.12, le canon 11 est d'une épaisseur sensiblement constante et est de forme conique évasée vers sa base. Ce canon 11 est subdivisé en ailettes axiales 14 élastiquement déformables, pour faciliter l'introduction et le guidage du doigt à l'intérieur du bouton. Ces ailettes 14 sont notamment ménagées à partir de saignées pratiquées axialement dans la paroi conique du canon 11, en deçà de la zone cylindrique que ce dernier comporte pour la réception de la base du fût 10 de l'élément de base 5 de la coque supérieure 4. On remarquera que l'extension axiale du canon 11 est de l'ordre de celle du fût 10.

## Revendications

1. Bouton de marquage et d'identification d'un animal destiné à recevoir un doigt par emboîtement irréversible, ce bouton étant composé de deux coques (3,4) obtenues par moulage d'un matériau plastique, l'une supérieure (4) et l'autre inférieure (3), qui logent entre elles un organe électronique (12) d'identification de l'animal et qui sont assemblées l'une à l'autre par soudage au faisceau LASER, la coque inférieure (3) étant translucide pour le passage du faisceau tandis que la coque supérieure (4) est teintée pour faire obstacle au passage du faisceau lors de l'opération de soudage des coques (3,4) entre elles, **caractérisé en ce que** la coque supérieure (4) est composée d'au moins deux éléments (5,6) assemblés en prolongement axial l'un de l'autre, dont un élément de base (5) de couleur obscure pour faire obstacle au passage du faisceau LASER et un élément de sommet (6).

2. Bouton de marquage et d'identification d'un animal selon la revendication 1, **caractérisé en ce que** l'assemblage entre eux des éléments de base (5) et de sommet (6) est réalisé par bi-injection de l'un des éléments sur l'autre des éléments.

3. Bouton de marquage et d'identification d'un animal selon la revendication 2, **caractérisé en ce que** l'un quelconque au moins des éléments de base (5) et de sommet (6) comporte des évidements (7) de réception de la matière constitutive de l'autre élément, pour l'ancrage des éléments l'un à l'autre.

4. Bouton de marquage et d'identification d'un animal selon la revendication 3, **caractérisé en ce que** l'élément de sommet (6) comporte lesdits évidements (7) de réception de la matière de l'élément de base (5).

5. Bouton de marquage et d'identification d'un animal selon l'une quelconque des revendications précédentes, **caractérisé en ce que** l'élément de base (5) est extérieurement enveloppé dans sa majeure partie par l'élément de sommet (6).

6. Bouton de marquage et d'identification d'un animal selon l'une quelconque des revendications précédentes, **caractérisé en ce que** l'élément de base (5) comporte à sa périphérie un épaulement (8) ménageant une feuillure de réception d'une collerette (9) que comporte la coque inférieure (3) à son pourtour.

7. Bouton de marquage et d'identification d'un animal selon les revendications 5 et 6, **caractérisé en ce que** les faces extérieures de la base de l'élément de sommet (6), de l'épaulement (8) de l'élément de base (5), et de la collerette (9) de la coque inférieure (3) affleurent, de sorte que le bouton étant assemblé, la partie apparente de l'élément de base (5) est réduite à l'épaulement (8) qu'il comporte.

8. Bouton de marquage et d'identification d'un animal selon l'une quelconque des revendications précédentes, **caractérisé en ce que** la coque inférieure (3) comporte une aile circulaire médiane (13) de calage de l'organe électronique (12).

9. Bouton de marquage et d'identification d'un animal selon l'une quelconque des revendications précédentes, **caractérisé en ce que** la coque inférieure (3) comporte un canon axial (11) de réception dudit doigt.

10. Bouton de marquage et d'identification d'un animal selon la revendication 9, **caractérisé en ce que** le canon axial (11) est à épaisseur sensiblement constante et est de forme conique évasée vers sa base.

11. Bouton de marquage et d'identification d'un animal selon la revendication 10, **caractérisé en ce que** le canon (11) est subdivisé en ailettes axiales (14) élastiquement déformables, entre lesquelles est destiné à circuler ledit doigt.

12. Bouton de marquage et d'identification d'un animal selon l'une quelconque des revendications 9 à 11, **caractérisé en ce que** le canon (11) comporte à sa base une zone cylindrique de réception de l'extrémité d'un fût (10) que comporte l'élément de base (5).

13. Bouton de marquage et d'identification d'un animal selon la revendication 12, **caractérisé en ce que** l'extension axiale du canon (11) est de l'ordre celle du fût (10).

14. Bouton de marquage et d'identification d'un animal selon l'une quelconque des revendications précédentes, **caractérisé en ce que** la matière constitutive de la coque inférieure (3) et des éléments (5,6) composant la coque supérieure (4) est le polyamide.

15. Bouton de marquage et d'identification d'un animal selon la revendication 14, **caractérisé en ce que** la matière constitutive de la coque inférieure (3) est le polyamide 12, celle de l'élément de sommet (6) est le polyamide 6.6 chargé de fibres de verre, et celle de l'élément de base (5) le polyamide 6.12.

## Claims

1. Animal marking and identification button tag which is intended to receive a male punch using an irreversible joining technique, this button tag including two shells (3,4), one upper (4) and the other lower (3), obtained by plastic moulding, which house therebetween an electronic device (12) for identifying animals and which are assembled to one another by means of laser welding, the lower shell (3) being translucent to allow the laser beam to pass through while the upper shell (4) is tinted to serve as an obstacle to the laser beam when the welding operation of the shells (3,4) to one another takes place, **characterised in that** the upper shell (4) comprises at least two elements (5,6) assembled such as to extend axially from one another, said elements including a dark base element (5) which serves as an obstacle to the laser beam and a top element (6).

2. Animal marking and identification button tag according to claim 1, **characterised in that** the assembly of the base element (5) and top element (6) to one another is carried out by bi-injection of one of the elements onto the other element.

3. Animal marking and identification button tag according to claim 2, **characterised in that** any one at least of the base element (5) and the top element (6) comprises recesses (7) for receiving the constituent material of the other element, in order to secure the elements to one another.

4. Animal marking and identification button tag according to claim 3, **characterised in that** the top element (6) comprises said recesses (7) for receiving the material of the base element (5).

5. Animal marking and identification button tag according to any one of the preceding claims, **characterised in that** the base element (5) is surrounded externally in the most part by the top element (6).

6. Animal marking and identification button tag according to any one of the preceding claims, **characterised in that** the base element (5) includes on its periphery a shoulder (8) provided with a groove to receive a rim (9) provided on the periphery of the lower shell (3).

7. Animal marking and identification button tag according to claims 5 and 6, **characterised in that** the external surface of the base of the top element (6), the shoulder (8) of the base element (5) and the rim (9) of the lower shell (3) are flush with each other, such that when the button tag is assembled, the visible part of the base element (5) is no larger than the shoulder (8) provided on it.

8. Animal marking and identification button tag according to any one of the preceding claims, **characterised in that** the lower shell (3) includes a median circular flange (13) for locking the electronic member (12) in place.

9. Animal marking and identification button tag according to any one of the preceding claims, **characterised in that** the lower shell (3) includes an axial sleeve (11) for receiving said projection.

10. Animal marking and identification button tag according to claim 9, **characterised in that** the axial sleeve (11) is of significantly constant thickness and is of conical shape, flared towards the base.

11. Animal marking and identification button tag according to claim 10, **characterised in that** the sleeve (11) is subdivided into elastically deformable axial fins (14), between which said projection is intended to pass.

12. Animal marking and identification button tag according to any one of claims 9 to 11, **characterised in that** the sleeve (11) includes a cylindrical region at its base for receiving the end of a shaft (10) provided on the base element (5).

13. Animal marking and identification button tag according to claim 12, **characterised in that** the axial extension of the sleeve (11) is of the same order as that of the shaft (10).

14. Animal marking and identification button tag according to any one of the preceding claims, **characterised in that** the constituent material of the lower shell (3) and the elements (5,6) comprising the upper shell (4) is polyamide.

15. Animal marking and identification button tag according to claim 14, **characterised in that** the constituent material of the lower shell (3) is polyamide 12, that of the top element (6) is glass fibre-reinforced polyamide 6.6, and that of the base element (5) is polyamide 6.12.

## Patentansprüche

1. Knopf zur Kennzeichnung und Identifizierung eines Tieres, welcher dazu bestimmt ist, durch unumkehrbares Einrasten einen Zapfen aufzunehmen, wobei sich der Knopf aus zwei Schalen (3, 4) zusammensetzt, die durch Formung eines plastischen Werkstoffs erhalten wurden, wobei es sich um eine obere (4) und eine untere (3) handelt, innerhalb derer sich ein elektronisches Organ (12) zur Identifizierung des Tieres befindet und die durch Laserstrahlschweißen zusammengefügt wurden, wobei die untere Schale (3) durchscheinend ist, um den Strahl durchzulassen, während die obere Schale (4) gefärbt ist, um während des Vorgangs des Verschweißens der Schalen (3, 4) ein Durchdringen des Strahls zu verhindern, **dadurch gekennzeichnet, dass** sich die obere Schale (4) aus mindestens zwei Elementen (5, 6) zusammensetzt, die derart zusammengefügt sind, dass sie sich gegenseitig in axialer Richtung verlängern, davon ein Grundelement (5), das von dunkler Farbe ist, um ein Durchdringen des Laserstrahls zu verhindern, und ein Kopfelement (6).

2. Knopf zur Kennzeichnung und Identifizierung eines Tieres gemäß dem Anspruch 1, **dadurch gekennzeichnet, dass** das Grundelement (5) und das Kopfelement (6) zusammengefügt werden, indem eines der Elemente durch Doppelspritzguss auf das andere aufgebracht wird.

3. Knopf zur Kennzeichnung und Identifizierung eines Tieres gemäß dem Anspruch 2, **dadurch gekennzeichnet, dass** mindestens eines der Grund(5)- und Kopf(6)-Elemente Aussparungen (7) aufweist, die dazu bestimmt sind, den Stoff, aus dem das andere Element besteht, aufzunehmen, um die Elemente miteinander zu verankern.

4. Knopf zur Kennzeichnung und Identifizierung eines Tieres gemäß dem Anspruch 3, **dadurch gekennzeichnet, dass** das Kopfelement (6) die Aussparungen (7) aufweist, die dazu bestimmt sind, Bestandteile des Grundelements (5) aufzunehmen.

5. Knopf zur Kennzeichnung und Identifizierung eines Tieres gemäß einem beliebigen der vorhergehenden Ansprüche, **dadurch gekennzeichnet, dass** das Grundelement (5) größtenteils vom Kopfelement (6) äußerlich umhüllt wird.

6. Knopf zur Kennzeichnung und Identifizierung eines Tieres gemäß einem beliebigen der vorhergehenden Ansprüche, **dadurch gekennzeichnet, dass** das Grundelement (5) in seinem Außenbereich einen Ansatz (8) aufweist, der einen Falz entstehen lässt, welcher zur Aufnahme eines Flansches (9) dient, mit welchem der Umfang der unteren Schale (3) versehen ist

7. Knopf zur Kennzeichnung und Identifizierung eines Tieres gemäß den Ansprüchen 5 und 6, **dadurch gekennzeichnet, dass** die Außenflächen der Basis des Kopfelements (6), des Ansatzes (8) des Grundelements (5) sowie des Flansches (9) der unteren Schale (3) eine durchgehende Fläche bilden, sodass nach dem Zusammenfügen des Knopfes vom Grundelement (5) lediglich des Ansatz (8) zu sehen ist.

8. Knopf zur Kennzeichnung und Identifizierung eines Tieres gemäß einem beliebigen der vorhergehenden Ansprüche, **dadurch gekennzeichnet, dass** die untere Schale (3) eine kreisförmig umlaufende Mittelrippe (13) aufweist, die zum Verkeilen des elektronischen Organs (12) dient.

9. Knopf zur Kennzeichnung und Identifizierung eines Tieres gemäß einem beliebigen der vorhergehenden Ansprüche, **dadurch gekennzeichnet, dass** die untere Schale (3) eine axiale Rundbuchse (11) aufweist, die zur Aufnahme des Zapfens dient.

10. Knopf zur Kennzeichnung und Identifizierung eines Tieres gemäß dem Anspruch 9, **dadurch gekennzeichnet, dass** die axiale Rundbuchse (11) von im Wesentlichen konstanter Dicke ist und eine konisch zur Basis sich erweiternde Form hat.

11. Knopf zur Kennzeichnung und Identifizierung eines Tieres gemäß dem Anspruch 10, **dadurch gekennzeichnet, dass** die Rundbuchse (11) von axialen Rippen (14) unterteilt ist, die elastisch verformbar sind, wobei der Zapfen sich in deren Zwischenraum bewegen soll.

12. Knopf zur Kennzeichnung und Identifizierung eines Tieres gemäß einem beliebigen der Ansprüche 9 bis 11, **dadurch gekennzeichnet, dass** die Rundbuchse (11) an ihrer Basis einen zylindrischen Bereich aufweist, der zur Aufnahme des äußersten Endes eines Schaftes (10) dient, mit welchem das Grundelement (5) versehen ist.

13. Knopf zur Kennzeichnung und Identifizierung eines Tieres gemäß dem Anspruch 12,
**dadurch gekennzeichnet, dass** die axiale Ausdehnung der Rundbuchse (11) in etwa derjenigen des Schaftes (10) entspricht.

14. Knopf zur Kennzeichnung und Identifizierung eines Tieres gemäß einem beliebigen der vorhergehenden Ansprüche, **dadurch gekennzeichnet, dass** es sich bei dem Stoff, aus dem die untere Schale (3) und die Elemente (5, 6) bestehen, aus welchen sich die obere Schale (4) zusammensetzt, um Polyamid handelt.

15. Knopf zur Kennzeichnung und Identifizierung eines Tieres gemäß dem Anspruch 14, **dadurch gekennzeichnet, dass** es sich bei dem Stoff, aus welchem die untere Schale (3) besteht, um Polyamid 12 handelt, bei demjenigen, aus welchem das Kopfelement (6) besteht, um glasfaserverstärktes Polyamid 6.6 und bei demjenigen, aus welchem das Grundelement (5) besteht, um Polyamid 6.12.
